# EUROPEAN PATENT APPLICATION

(11) **EP 4 513 467 A1**
(43) Date of publication of application: **26.02.2025**
(21) Application number: 23791973.3
(22) Date of filing: 16.01.2023
(51) Int. Cl.: G08G 5/00

(54) **AIR ROUTE AND AIR CORRIDOR GENERATION METHOD AND SYSTEM THEREOF**

(30) Priority: 21.04.2022 KR 20220049252
(71) Applicant: Choi, Ok Jae, Seoul 08289 (KR)
(72) Inventor: Choi, Ok Jae, Seoul 08289 (KR)
(74) Representative: Cabinet Chaillot
(86) International application number: PCT/KR2023/000748
(87) International publication number: WO 2023/204389

(57) **Abstract**

The present invention relates to a method for guiding an aircraft along an air route by using a planar surface or curved surface formed of points at which two signals are simultaneously received when the two signals are transmitted into the sky, wherein the air route and an air corridor of the aircraft are provided by using lines or air corridors obtained by intersecting a plurality of the planar surfaces or the curved surfaces formed using the two signals.

## Description

### [Technical Field]

The present invention is a technology for guiding a track of an aircraft, and more particularly, to a technology for guiding a track by generating the track and an air corridor with a wireless signal.

### [Background Art]

In response to the increase in an air traffic volume due to the increase in three-dimensional transportation means such as drones, personal aircraft, and unmanned aerial vehicles, an aircraft type and a track are being designated for each airspace so that a lot of aircraft may operate in a limited space, and tracks and tubeshaped air corridors are being proposed.

A method of guiding a track, guiding landing, and providing a track using characteristics of a planar surface formed by points where two signals arrive simultaneously when the signals are transmitted simultaneously from the two points is disclosed Korean Patent Laid-Open Publication Nos. 1020180137376, 1020190050309, and 1020200123714.

### [Related Art Document]

### [Patent Document]

(Patent Document 1) Korean Patent Laid-Open Publication No. 1020180137376
(Patent Document 2) Korean Patent Laid-Open Publication No. 1020190050309
(Patent Document 3) Korean Patent Laid-Open Publication No. 1020190111054

### [Disclosure]

### [Technical Problem]

As a method of operating tracks and air corridors to handle the increasing air traffic volume due to the increase in three-dimensional (3D) transportation means, navigation which uses precision satellite navigation and image-based relative navigation is being considered. The precision satellite navigation has problems with a reception failure of satellite signals, and the image navigation has problems with image acquisition due to snow, rain, fog, etc.

As related art, Korean Patent Laid-Open Publication Patent Nos. 1020180137376 and 1020190050309 provide a straight or curved track through points where two guidance signals which are transmitted simultaneously or with a time difference are received simultaneously. The tracks disclosed in the two related arts provide direction information but do not provide altitude information, so it is necessary for an aircraft to fly at a designated altitude using an altimeter or a global positioning system (GPS). In the event of the altimeter or GPS failure, there is a risk of collision with surrounding aircraft. In addition, as a related art, Korean Patent Laid-Open Publication No. 1020190111054 defines flight paths with transmission beams of two base stations facing each other and determines an altitude with a separate barometer.

The present invention is to solve the above problems by generating a track and an air corridor that guide a flight direction and a flight altitude with radio waves and guiding an aircraft to safely fly along the track and air corridor even in the event of bad weather/visibility restrictions and the like and GPS failure.

### [Technical Solution]

A virtual surface is formed by two points where signals transmitted from a signal source are received simultaneously. Two surfaces formed by two signal sources intersect each other in the sky to provide a track that guides a flight direction and a flight altitude, and four surfaces formed by four signal sources intersect each other in the sky to create a rectangular prism corridor to provide an air corridor that guides the flight direction and altitude. An aircraft is controlled to a location where a receiving terminal receives all signals simultaneously to fly along a track and operates the air corridor by controlling the track to a location where identification signals (ID signals) in all air corridors are received with priority.

### [Advantageous Effects]

The track guidance signals transmitted from the ground guides aircraft with an accurate track even in weather conditions where visibility is poor, such as foggy, snowy, and rainy conditions and enables the track guidance even in areas where GPS is unavailable, the fast track recognition speed of the navigation system enables fast track guidance for high-speed aircraft, and the a precise track and air corridor have the effect of minimizing separation track width between aircraft to allow more aircraft to operate in the same space.

### [Description of Drawings]

The drawings attached to this specification illustrate preferred embodiments of the present invention, and like reference numerals are used for like components throughout the attached drawings. In order to ensure clear description, the drawings have been exaggerated in terms of expression or omitted when it is difficult to express the explanation in the drawings. Since the drawings serve to further provide understanding of the technical idea together with the detailed description of the present invention, they should not be interpreted only as limited to matters described in the drawings.
FIG. 1 is an explanatory diagram of simultaneous arrival points of two signals.
FIG. 2 is an explanatory diagram of a track generation method according to the embodiment of the present invention.
FIG. 3 is an explanatory diagram of an air corridor generation method according to the embodiment of the present invention.
FIG. 4 is a diagram illustrating a configuration of a signal transmitter and a receiving terminal according to the embodiment of the present invention.

### [Best Mode]

In the following description, numerous details are presented to provide a more complete description of embodiments of the present invention. However, it will be apparent to one of ordinary skill in the art that the embodiments of the present invention may be practiced without some of these specific details. In other instances, well-known structures and devices are shown in a block diagram form rather than in detail so as not to obscure the embodiments of the present invention. In addition, features of different embodiments described below may be combined with each other unless specifically stated otherwise. The terms used in the description have been appropriately defined to describe the present invention, and the terms should be interpreted according to meanings and concepts consistent with the technical idea.

In addition, a detailed description of well-known functions and configurations that may unnecessarily make the gist of the present disclosure unclear will be omitted.

It is widely known that all signals of the same characteristics within the same medium travel at the same speed and travel the same distance for the same time, and that traces of points whose distance difference between two vertices is 0 become a straight line on a planar surface and become a planar surface within a space, and traces of points whose distance difference is the same become hyperbolas and hyperboloids.

Hereinafter, embodiments of the present invention will be described in detail with reference to the accompanying drawings so that those skilled in the art to which the present invention pertains may easily practice the present invention.

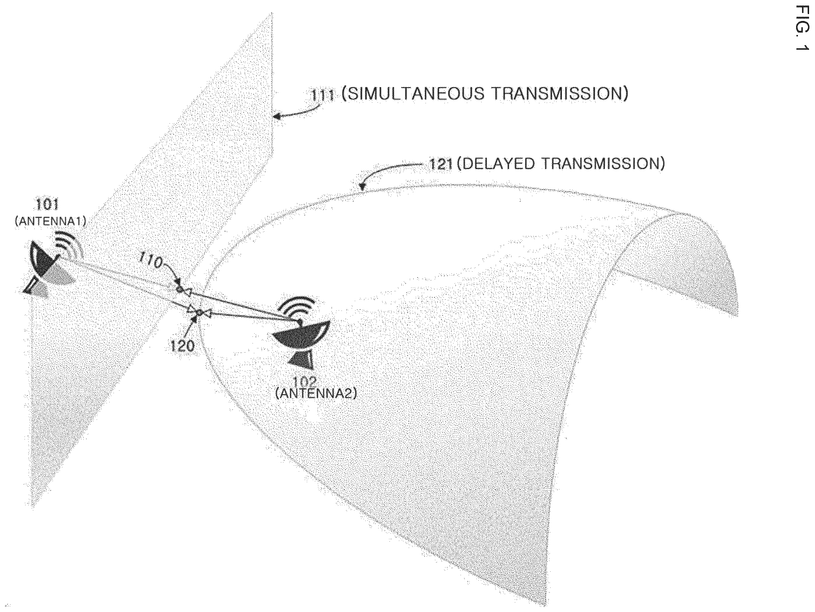

FIG. 1 is an explanatory diagram of simultaneous arrival points of two signals. Referring to FIG. 1, when an antenna 1 101 and an antenna 2 102 transmit signals simultaneously, two signals travel for the same period of time and simultaneously reach a point 110 where the distance difference is 0. When the antenna 2 102 transmits signals later than the antenna 1 101, the distance that two signals travel for the same period of time is less than the signals of the antenna 1 101 due to the time difference, so the two signals simultaneously reach points 120 where there is a distance difference that is as great as the time difference between the two antennas. When two signals are transmitted simultaneously or are transmitted on a planar surface 111 with a time difference, the two signals simultaneously arrive at a curved surface 121, and points where the two signals simultaneously arrive form a planar surface or a curved surface, and when the two signals are received simultaneously, it may be considered that the two signals are located on the planar surface or the curved surface.

By receiving the two signals simultaneously, it is possible to quickly and easily recognize that the two signals are located on the planar surface or the curved surface, but it is not possible to specify the exact points. A line may be represented by intersecting two surfaces, and three lines, a triangular prism, points, two lines, etc. may be represented by an intersection of three surfaces, so it is possible to specify a location, direction, height, line, area, and space with a plurality of surfaces.

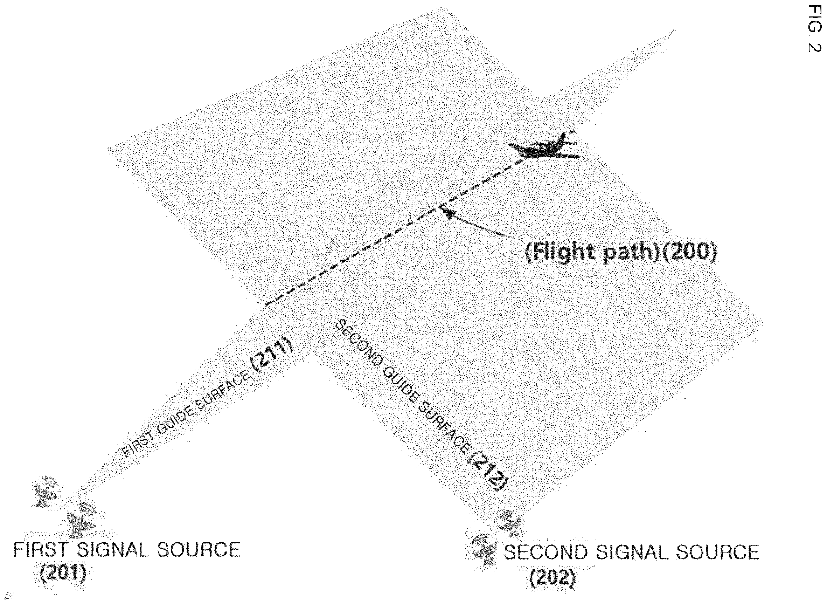

FIG. 2 is a generation diagram of a straight track according to the embodiment of the present invention. The drawing for describing a curved track is omitted, but the curved track generated by an intersection of a planar surface and a curved surface or an intersection of curved surfaces may be inferred.

Referring to FIG. 2, to form a planar surface including a designated track 200 on aeronautical charts from two antennas of a first signal source 201, by simultaneously transmitting two signals in a vertical direction or an obliquely vertical direction with respect to the ground to form a first guide surface 211, and to form the planar surface including the designated track 200 on the aeronautical charts from two antennas of a second signal source 202, by simultaneously transmitting the two signals in the obliquely vertical direction with respect to the ground to form a second guide surface 221, the first and second guide surfaces 211 and 221 may intersect at the track 200 in the sky to provide a track that specifies with a wireless signal direction and altitude to an aircraft. When the aircraft controls its flight so that the signals transmitted from the first signal source 201 and the second signal source 202 that generate the track 200 are simultaneously received, the aircraft flies along the direction and flight altitude of the track 200.

When track identification (ID) is added to a signal that generates the track 200, it is possible to navigate the track by distinguishing the traced ID from signals of tracks that overlap with each other when turning, diverging, or merging with respect to the track. It is also possible to add track information necessary for the navigation of the aircraft.

When the curved surface formed by transmitting the two signals with the time difference from the signal source and the planar surface or curved surface formed by another signal source intersect with each other to generate a curve, it is also possible to provide the curved track.

When the straight or curved tracks generated from the signal sources are combined and connected, it is possible to implement various types of tracks. In addition, it is also possible to provide a plurality of tracks, such as a multi-lane road on the ground, with the plurality of tracks.

By generating a plurality of tracks 200 that match air routes (ATS routes) on aeronautical charts and matching the plurality of tracks 200 with the air routes, it is also possible to construct a track network.

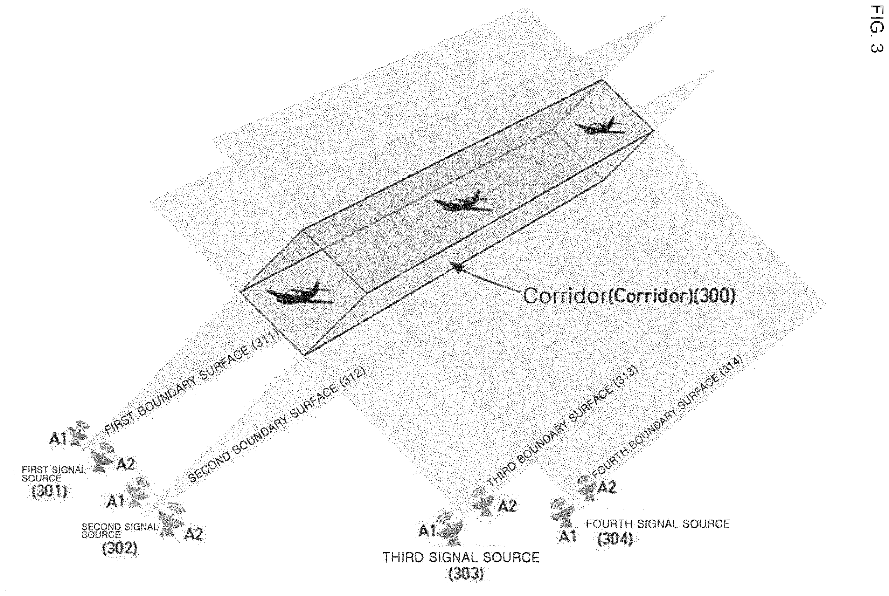

FIG. 3 is an explanatory diagram of a straight rectangular air corridor according to the embodiment of the present invention. The drawing of a curved rectangular air corridor is omitted, but it may be inferred that the curved rectangular air corridor is created by an intersection of two planar surfaces with two curved surfaces or an intersection of two curved surfaces with two other curved surfaces.

Referring to FIG. 3, by using a characteristic in which points where two signals simultaneously transmitted are simultaneously received form a planar surface, a first signal source 301 simultaneously transmits two signals in an obliquely vertical direction with respect to the ground to form a first surface that corresponds to a first boundary surface 311 of an air corridor 300, a second signal source 302 simultaneously transmits two signals in an obliquely vertical direction with respect to the ground to form a second surface that corresponds to a second boundary surface 312 of the air corridor 300, a third signal source 303 simultaneously transmits two signals in an obliquely vertical direction with respect to the ground to form a third surface that corresponds to a third boundary surface 313 of the air corridor 300, and a fourth signal source 304 simultaneously transmits two signals in an obliquely vertical direction with respect to the ground to form a fourth surface that corresponds to a fourth boundary surface 314 of the air corridor 300.

The first, second, third, and fourth surfaces 311, 312, 313, and 314 formed by the signals transmitted from the first, second, third, and fourth signal sources 301, 302, 303, and 304 intersect each other in the sky to generate the same air corridor as the air corridor 300, and when the aircraft is controlled so that A2 signals of the first signal source 301, A1 signals of the second signal source 302, A2 signals of the third signal source 303, and A1 signals of the fourth signal source 304 are received preferentially, the aircraft may operate within the air corridor 300.

When a fifth signal source is added to the air corridor 300 of FIG. 3 to form a fifth surface parallel to the first boundary surface 311 and positioned in the middle of the first boundary surface 311 and the second boundary surface 312, the fifth surface that is formed intersects with the third boundary surface 313 and the fourth boundary surface 314, and the air corridor 300 is divided into two air corridors. The two divided air corridors may be used as air corridors for low speed, high speed, passing, ascent, descent, etc. By dividing the air corridor into a plurality of surfaces formed by a plurality of signal sources or adding boundary surfaces to the air corridors, a plurality of air corridors are generated and divided into various purposes such as aircraft type, speed, flight direction, and it may also be possible to configure a plurality of air corridors such as multi-lane roads on the ground.

In FIG. 3, a straight rectangular air corridor is generated by four signal sources, but it is also possible to generate a triangular air corridor by intersecting three surfaces formed by three signal sources. It is also possible to generate a multilateral air corridor with three or more surfaces.

It is also possible to add an air corridor ID and an ID indicating an inside/outside of the corridor to the signal transmitted by the signal source and to add and transmit any air corridor information required for aircraft navigation.

It is also possible to generate an air corridor including a plurality of tracks by generating one or more tracks 200 inside the air corridor 300.

It is also possible to implement various types of air corridors by combining and connecting a plurality of straight or curved air corridors generated by the signal source.

It is also possible to configure an air corridor network by generating an air corridor that connects all of the starting points of corridors, turning points of corridors, intersecting points of corridors, merging points of corridors, and ending points of corridors on aeronautical charts.

The planar surface or curved surface may be obtained only when a signal source transmits a signal accurately without a time error. In order to transmit the signal without the time error, in a case in which the distance between the two antennas transmitting the signals is close, if the two signals are generated from one signal source and transmitted to the two antennas through transmission cables of the same characteristics and length, the two signals are transmitted at the same travel time from generation to transmission and transmitted without error from the antennas. In addition, it is also possible to transmit wireless signals to two transmitting antennas by physically positioning one signal source from the two transmitting antennas at the same distance, which is equivalent to transmitting the signals by the transmission cables of the same length and is very useful when the distance between the two transmitting antennas is far. In a case in which the distance between the two transmission antennas is far and there are obstacles, when each time device should be used, two time devices should be constantly monitored and managed to prevent time errors from occurring and correct transmission time errors.

By transmitting the two signals from the signal source simultaneously or with a time difference, the time difference between the two signals can be generated inside the signal source, and the travel time can be obtained through the transmission distance of the signal, so it is also possible to generate the time difference between the two signals through the length difference of the transmission cables between the signal source and the two transmission antennas or the transmission distance difference of the wireless signals.

Even if circuit boards are assembled with the same components on the same circuit under the same conditions, there may be a slight difference in signal processing time for each circuit board. Therefore, even if the signals are processed in the same process on two identical circuit boards, the transmission time error between the two signals transmitted from the signal source may occur due to a slight processing time error that occurs. When the error in the transmission time between the two signals occurs, the planar surface is distorted into the curved surface, and the curvature of the curved surface changes, affecting the accuracy of the track. A function of checking the transmission error of the two signals and correcting the error should be added to the signal source, so the transmission time errors should always be checked and corrected to maintain an accurate track at all times.

In order to implement the error detection and correction function of the transmission time of the two signals in the signal source, a receiving unit, a comparison unit, and an error correction unit of the two signals may be additionally configured.

The transmission time error check of the signal source may detect the error in the transmission signals of the antenna connection part, detect the error by receiving the transmitted signals, or remove the error by receiving external error correction information.

The external error information is determined to be an error in a case that an error detector installed at the points (locations on the planar surface or curved surface) where the two signals are received simultaneously and at points of a physically equal distance between the two transmission points receive two signals with a time difference, and thus, when information on a primarily received signal or a subsequently received signal is notified to the transmitting signal source to correct the error, the signal source can maintain an accurate transmission time at all times. In addition, by adding the error detector to the signal source, it is possible to detect the error in the two transmission signals of another signal source and to notify another signal source of the detected error information. A method of detecting the time error by simultaneously receiving two signals at a points of the same physical distance between two transmitters to detect and correct the time error can be applied to all systems that transmit time-synchronized signals.

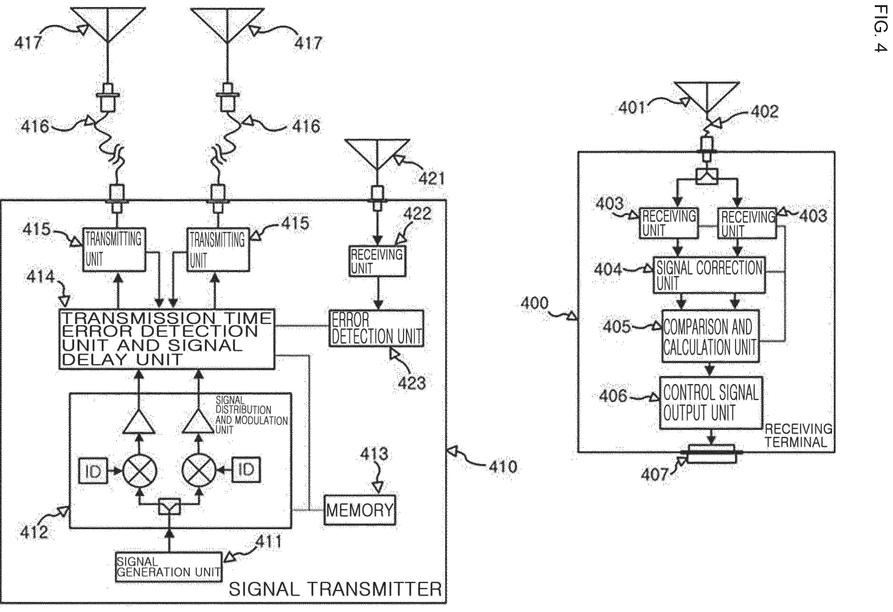

FIG. 4 is a configuration diagram of a signal source and a receiver according to the embodiment of the present invention.

Referring to FIG. 4, according to the embodiment of the configuration of the signal source and the receiver, the signal source includes a signal transmitter 410, two transmission lines 416, and two antennas 417, and the receiver includes an antenna 401, a transmission line 402, and a receiving terminal 400.

The signal transmitter 410 of the signal source includes a signal generating unit 411 that generates a reference signal, a signal distributing unit 412 that adds an ID to two signals of the divided reference signal and modulates the two signals, a memory 413 that sets and stores the ID and transmission time, a signal delay unit 414 that delays the transmission time of the two signals according to the set time of the memory 413, and a two transmitters 415 that amplify and output the signals. The signal delay unit 414 includes an error detection unit that detects and corrects an error in output signals of the two transmitters 415. The signal transmitter 410 may further include an antenna 421 that receives two signals transmitted from the two antennas 417, a receiver 422 that divides the received signals into two signals and demodulates the two signals, and an error detection unit 423 that compares the two demodulated signals to detect a transmission time error and transmits correction information to the signal delay unit 414 in order to correct the error. In addition, the correction information transmitted from the error detector installed at the simultaneous arrival points of the two signals may be received and transmitted to the signal delay unit 414 to correct the transmission time error.

When a processor is added, it is also possible to implement signal distribution, ID addition, transmission time delay, and transmission time correction functions through software.

The two transmission lines 416 must be transmission cables of the same length having the same characteristics of signal delay and transmission speed, so there is no transmission error. The time difference delay of the signals may also be made possible by utilizing the difference in a length of the two transmission cables or the difference in the signal delay characteristics of the two transmission lines 416.

The receiving terminal 400 includes a distributor that receives two signals through one antenna and distributes the two signals to two receiving units, two receiving units 403 that demodulate the signals, a signal correction unit 404 that corrects processing errors of the receiver by itself, a comparison and calculation unit 405 that compares and calculates the reception times or signal phases of the two signals, and a control signal output unit 406 that outputs the comparison and calculation result to a flight control device. When the processor is added to the comparison and calculation unit to correct the processing error through software by itself, a configuration in which the signal correction unit 404 is removed may also be made possible. The signals received by the antenna 401 are distributed, and the travel time of the two signals moving to the two receivers should be the same.

The transmission time error detector may include a receiving unit that is installed at points where two signals arrive simultaneously or at a physically equal distance from the transmission points of the two signals and receives two signals with one antenna, a distributor that distributes a received signal into two signals, a demodulation unit that demodulates the two distributed signals, a comparison unit that compares the two demodulated signals, and a signal transmission unit that converts the comparison result into correction information and transmits the correction information to an external signal source. In addition, the error detector may be configured by replacing the control signal output unit 406 in the configuration of the receiving terminal 400 with a signal transmission unit that converts the comparison and calculation result into the correction information and transmits the correction information. The error detector is useful for detection and correction of system time error in all systems that use synchronized time.

The ID of the signal transmission signal of the signal source is used to distinguish the signals transmitted from each antenna of the signal source and to distinguish each signal source. The ID is unique data, and the signal modulated by adding the ID can be modulated in various ways such as analog modulation, digital modulation, pulse modulation, and orthogonal frequency division multiplexing (OFDM) modulation. The transmission frequency of the signal source may be a multi-channel bandwidth frequency or a different frequency having little interference.

FIG. 4 merely illustrates an example of a signal source transmitting two signals and a receiver receiving the two signals, and therefore, the signal source and receiver according to the present invention should not be interpreted as being limited to those illustrated in FIG. 4. The receiving terminal 310 can implement a simple receiving circuit that receives a guidance signal, outputs the signal as a digital logic value, and compares and processes the digital logic value. Therefore, there is an advantage of being simpler than a calculation processing circuit that performs complex calculations of GPS signals and complex image processing of cameras, resulting in a lower price and faster processing. The medium of the signal can be any medium, such as light, electromagnetic waves, or sound waves. The path and transmission line of the signal can be any medium, such as a vacuum, air, or water and a combination thereof is also possible.

The embodiments of the present invention described above and illustrated in the drawings should not be construed as limiting the technical idea of the present invention. The protection scope of the present invention is limited only by the matters described in the claims, and those with ordinary knowledge in the technical field of the present invention can improve and change the technical idea of the present invention in various forms. Accordingly, such improvements and changes will fall within the protection scope of the present invention if they are obvious to those with ordinary knowledge.

## Claims

1. A track generation method of an aircraft, comprising:
operation a of transmitting two signals into the sky simultaneously or with a time difference to form a planar surface or a curved surface such that the planar surface or the curved surface formed at points where the two signals arrive simultaneously is in a vertical direction or a vertically inclined direction with respect to the ground;
operation b of transmitting two signals vertically inclined into the sky simultaneously or with a time difference to form a planar surface or curved surface so that the planar surface or the curved surface formed at the points where the two signals arrive simultaneously intersects the planar surface or curved surface of operation a in the sky; and
operation c of using as a track indicating a flight direction and a flight altitude, a straight line or curved line parallel or inclined with respect to the ground generated by intersecting the planar surface or curved surface of operation a and the planar surface or curved surface of operation b in the sky.

2. The track generation method of claim 1, further comprising generating tracks of operation c that are consistent with tracks on an aeronautical chart to form a track network.

3. The track generation method of claim 1, further comprising adding an identification (ID) to the two signals

4. An air corridor generation method of an aircraft, comprising:
operation a of forming at least three planar surfaces or curved surfaces that are perpendicular or inclined with respect to the ground by transmitting two signals into the sky simultaneously or with a time difference to form a planar surface or a curved surface at points where the two signals reach simultaneously; and
operation b of intersecting the at least three planar surfaces or curved surfaces formed in operation a with each other in the sky to form as an air corridor a corridor parallel or inclined with respect to the ground.

5. The air corridor generation method of claim 4, further comprising connecting all corridor starting points, corridor turning points, corridor branching points, corridor merging points, and corridor ending points on an aeronautical chart with the corridors generated in operation b to generate an air corridor network.

6. The air corridor generation method of claim 4, further comprising adding a corridor ID and an ID indicating an inside and outside of the corridor to the two signals.

7. A method of correcting a transmission time error, comprising:
in detecting and correcting a transmission time error of two signals from a signal source, receiving two signals at a point where the two signals arrive simultaneously to determine a reception time difference as the transmission time error when a reception difference occurs between the two signals, and correcting an occurrence of error.

8. A method of calculating a flight position, comprising:
in calculating a track position of an aircraft flying along a track or air corridor, starting transmitting of a positioning signal from one of the two signal sources positioned at a starting point and an ending point of a track or an air corridor, the other signal source that receives the positioning signal transmitting the positioning signal in response, and when the two signal sources receive a positioning signal response from the other signal source, repeating a process of transmitting the positioning signal in response; and
by receiving the positioning signals from the two signal sources, calculating the position of the aircraft flying between the starting point and the ending point of the track or air corridor using a distance between the starting point and the ending point and a reception time difference of two positioning signals.

9. A method of generating an air corridor including a track, comprising generating the air corridor by the method of claim 4 and generating at least one track included inside the air corridor by the method of claim 1 so that the at least one track is included.

10. A track operation system of an aircraft, comprising:
at least two signal sources that transmit two signals simultaneously or with a time difference so that a planar surface or a curved surface is formed at points where the two signals arrive simultaneously to form at least two planar surfaces or curved surfaces, and the planar surfaces or curved surfaces are intersected in the sky to generate at least one straight or curved track parallel or inclined with respect to the ground; and
a receiving terminal that has a function of receiving transmission signals of the at least two signal sources generating at least one track and controlling a flight path of the aircraft so that the transmission signals generating one track are received simultaneously.

11. An air corridor operating system of an aircraft, comprising:
at least three signal sources that transmit two signals indicating an inside and outside of an air corridor simultaneously or with a time difference to form a planar surface or a curved surface at points where the two signals arrive simultaneously to form at least three planar surfaces or curved surfaces and intersect the three planar surfaces or curved surfaces to generate at least one air corridor; and
a receiving terminal that receives transmission signals of the signal sources generating the air corridor and controls a flight path so that signals indicating the inside of the air corridor are received preferentially to enable the aircraft to fly inside the air corridor.

12. The air corridor operating system of claim 11, further comprising:
at least two signal sources that generate at least one track inside the air corridor by the method of claim 1; and
wherein the receiving terminal further includes a function of controlling the flight path of the aircraft so that the transmission signals of the at least two signal sources that generate at least one track inside the air corridor are received simultaneously to generate one track.

13. A device for detecting a transmission time error of two signals, comprising:
a receiving unit that is installed at a point where the two signals arrive simultaneously or at a point that is physically the same distance from transmission points of the two signals and receives the two signals with one antenna;
a distribution unit that distributes the received signal into two signals;
a demodulation unit that demodulates each of the distributed signals;
a comparison unit that compares the two demodulated signals; and
a signal transmission unit that transmits a comparison result.
